# EUROPEAN PATENT SPECIFICATION

(11) **EP 3 187 143 B1**
(45) Date of publication and mention of the grant of the patent: **04.04.2018**
(21) Application number: 15846213.5
(22) Date of filing: 08.07.2015
(51) Int. Cl.: A61C 8/00, A61C 13/20, A61C 13/01

(54) **IMPLANT SUPERSTRUCTURE**
OBERTEILSTRUKTUR EINES IMPLANTATS
STRUCTURE DE PARTIE SUPÉRIEURE D'IMPLANT

(30) Priority: 30.09.2014 JP 2014201345
(43) Date of publication of application: 05.07.2017
(73) Proprietor: Reality Dental Laboratory Corporation, Tokyo 102-0074 (JP)
(72) Inventor: UZAWA, Shinobu, Tokyo 102-0074 (JP); YOSHINARI, Masao, Tokyo 101-0061 (JP)
(74) Representative: Prüfer & Partner mbB Patentanwälte · Rechtsanwälte
(86) International application number: PCT/JP2015/069636
(87) International publication number: WO 2016/051902

(56) References cited:
- JP-A- S52 139 620
- JP-A- S55 103 298
- JP-A- 2002 528 169
- JP-A- 2003 286 526
- JP-A- 2005 000 940
- JP-A- 2012 183 585
- JP-A- 2014 521 468
- JP-U- 3 181 073
- KR-A- 20120 130 882
- US-A- 5 873 721

## Description

### Technical Field

The present invention relates to a superstructure used for implants.

### Background Art

An implant includes a pure-titanium or titanium-alloy fixture planted in a jawbone and a superstructure coupled to the fixture. The superstructure includes a framework, an artificial tooth bonded to the framework, and a coupling member joined to a lower part of the inside of the framework to couple the framework to the fixture.

Conventionally, the framework is made of a gold alloy, a platinum alloy, pure titanium, a titanium alloy, zirconia, or the like in view of biocompatibility, workability, etc. The coupling member is made of an alloy of a noble metal such as gold or platinum, or a framework member is directly processed to serve as the coupling member, especially a gold alloy is preferred in view of corrosion resistance, hardness, and workability. The artificial tooth is made of porcelain, a hard resin, or the like, of which porcelain is preferred in view of wear resistance, cleanability, and self-cleaning properties.

An implant is provided inside the oral cavity of a patient as follows. First, the fixture is planted in the jawbone of the patient. Next, the framework and the coupling member are joined together, and then an artificial tooth is formed on the framework to form the superstructure. In the case where the artificial tooth is made of porcelain, a powder raw material is applied to the outer surface of the framework and fired at a high temperature to form the artificial tooth. Next, the coupling member of the superstructure is fastened with a screw to the fixture planted inside the oral cavity of the patient.

It has been proposed to use a cobalt-chromium alloy that is inexpensive and superior in rigidity to other materials such as a gold alloy, a platinum alloy, pure titanium, and a titanium alloy for the framework constituting a part of the superstructure.

However, a cobalt-chromium-alloy framework has a problem with the accuracy of the joint part due to an oxide film formed on the surface during firing of porcelain etc.

Another problem is the difficulty of joining together the cobalt-chromium-alloy framework and the gold-alloy coupling member.

If one attempts to join the two together by cast-joining, as the melting point of the cobalt-chromium alloy is close to the melting point of the gold alloy, the gold-alloy coupling member melts when the cobalt-chromium alloy is melted, which makes cast-joining itself difficult.

Joining the cobalt-chromium alloy and the gold-alloy coupling member by laser welding may result in lower accuracy of joint as the cobalt-chromium alloy is oxidized (corroded) during laser welding. As the characteristics laser welding that the welding area is small and only the surface layer is welded, the framework and the coupling member are poorly joined together and thus may be disjoined while in use inside the oral cavity. Moreover, air bubbles are generated at the joint part during laser welding which may cause the holes in the artificial tooth because air is released from the air bubbles while firing process of the powder raw material applied on to the framework to form the artificial tooth.

Joining together a cobalt-chromium alloy and a gold alloy by soldering is a possible solution to the above problems, but joining by soldering is not practiced at present. Implants and superstructures are known from KR 2012/0130882 A.

### Citation List

### Non Patent Literature

Non Patent Literature 1: Isao Murata et al., "Bond Strength of Cobalt-Chromium Alloy for Metal Ceramics Joined with High-Fusing Gold Solder", Journal of Japanese Society of Oral Implantology, Vol. 26, No. 3, Japanese Society of Oral Implantology, October 18, 2013, pp. 425-432

### Summary of Invention

### Technical Problem

The present inventors evaluated the soldering strength of cobalt-chromium alloys and evaluated the soldering strength of gold alloys too.(see Non Patent Literature 1), but failed to solder together a cobalt-chromium alloy and a gold alloy to evaluate the strength. Thus, we have yet to realize an abutment with a cobalt-chromium-alloy framework and a gold-alloy coupling member soldered together.

The present invention aims to provide a superstructure for which a cobalt-chromium alloy is used. Solution to Problem

To achieve the above object, the present embodiment provides a superstructure according to claim 1.

In the superstructure of the present embodiment, the cobalt-chromium-alloy framework and the gold-alloy coupling member are soldered together with the solder composed of a gold alloy containing gold and silver, and thus can be firmly joined together and integrated.

As the framework is made of a cobalt-chromium alloy, the superstructure of the present embodiment has excellent rigidity compared with conventional superstructures with the framework made of a material such as a gold alloy, a platinum alloy, pure titanium, or a titanium alloy. Thus, excellent rigidity can be secured even when the superstructure itself is reduced in diameter or height, which is a particularly beneficial for incisors for which thin artificial teeth are desired or molars for which short-height artificial teeth are desired.

The gold alloy composing the coupling member in the superstructure of the present embodiment has lower hardness than pure titanium or a titanium alloy composing the fixture. Accordingly, if an excessive force is accidentally exerted between the superstructure and the fixture while the superstructure is coupled to the fixture, the coupling member deforms but the fixture is prevented from deforming. Thus, the need for replacing the fixture is avoided and burden on patients can be reduced.

In the superstructure of the present embodiment, two or more lateral holes are bored in the framework. The lateral holes include a large-diameter hole with a larger opening diameter and a small-diameter hole with a smaller opening diameter.

The clearance between the framework and the coupling member is very narrow. Thus, a high level of skill is required to reliably introduce a solder into the clearance. If plurality of lateral holes is provided, one can introduce a solder through one lateral hole and recognize the solder overflowing through another lateral hole to thereby visually confirm that the clearance has been filled with the solder.

The plurality of lateral holes also allows one to introduce a solder through the plurality of lateral holes. It is preferable that the lateral holes include a large-diameter hole that is used mainly to introduce the solder, and a small-diameter hole with a smaller diameter. It is preferable that the small-diameter hole is provided on the side opposite from the large-diameter hole so that the solder filled through the large-diameter hole can be recognized. Reliable soldering allows the implant to maintain its strength.

In the superstructure of the present embodiment, a solder containing gold within a range of 80 to 85 mass% and silver within a range of 14 to 17 mass% can be used as the solder to reliably join together the cobalt-chromium-alloy framework and the gold-alloy coupling member.

In the superstructure of the present embodiment, it is preferable that the coupling member includes, at an end thereof on the side joined to the fixture in the axial direction of the coupling member, an engaging part that is formed so as to be engageable with the fixture and a flange that protrudes outward in the radial direction from the outer circumferential surface of the coupling member; that the framework includes a small-diameter cylindrical member that is provided on the side of the coupling member opposite from the side joined to the fixture, and a large-diameter cylindrical member that is provided on the side of the outer circumferential surface of the coupling member except for the flange and on the side of the outer circumferential surface of the small-diameter cylindrical member; and that the small-diameter cylindrical member and the large-diameter cylindrical member of the framework and the coupling member are integrated by being soldered together with the solder.

According to this configuration, the small-diameter cylindrical member and the large-diameter cylindrical member of the framework are joined together; the small-diameter cylindrical member is joined to the side of the coupling member opposite from the side joined to the fixture; and the large-diameter cylindrical member is joined to the outer circumferential surface of the coupling member except for the flange. Thus, the framework and the coupling member are joined together more firmly. Since the clearance between the small-diameter cylindrical member and the large-diameter cylindrical member and the clearance between the large-diameter cylindrical member and the coupling member communicate with each other, the solder can be spread throughout these clearances during soldering with the solder, so that the members can be reliably joined together.

It is preferable that the two or more lateral holes are bored in the large-diameter cylindrical member of the framework; that at least one lateral hole is bored at such a position as to allow the coupling member to be viewed before a solder is introduced; and that at least one lateral hole is bored at such a position as to allow the small-diameter cylindrical member to be viewed before a solder is introduced.

According to this configuration, the solder can be introduced into the clearances between the large-diameter cylindrical member of the framework and the coupling member and between the large-diameter cylindrical member and the small-diameter cylindrical member, and thus the solder can be spread reliably to the clearances.

Depending on the state inside the oral cavity of a patient, the superstructure may be coupled to the fixture with an abutment made of pure titanium or a titanium alloy interposed between the coupling member and the fixture. The superstructure of the present embodiment is also applicable to such cases.

### Brief Description of Drawings

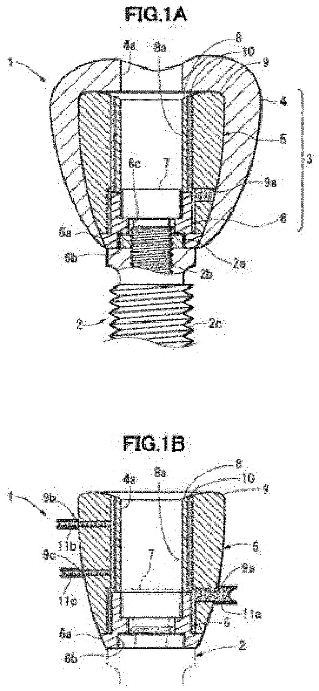

[Figure 1] Figure 1 shows a superstructure of a first embodiment (fixture-level implant). Figure 1A is a partial section view showing an implant employing the superstructure of the first embodiment. Figure 1B is a view showing positions of a large-diameter hole and small-diameter holes, through which a solder is introduced, in a framework of the first embodiment in a case where a plurality of lateral holes are provided.

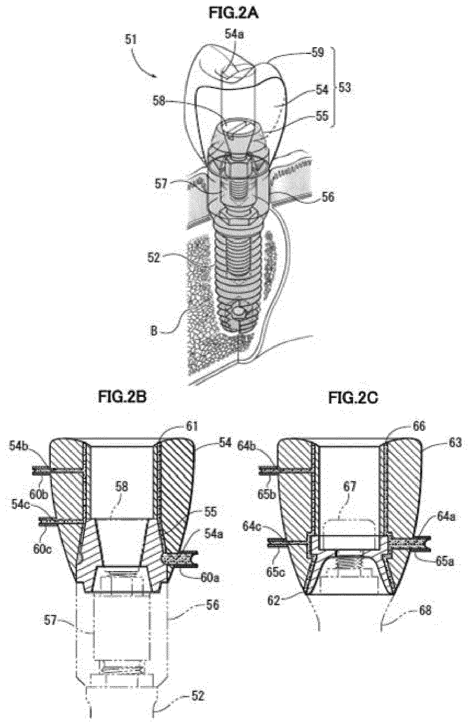

[Figure 2] Figure 2 shows a superstructure of a second embodiment (abutment-level implant). Figure 2A is a perspective view showing an implant employing the superstructure of the second embodiment. Figure 2B is a view showing positions of a large-diameter hole and small-diameter holes, through which a solder is introduced, in a framework of the superstructure shown in Figure 2A in a case where a plurality of lateral holes are provided. Figure 2C is a view showing positions of a large-diameter hole and small-diameter holes, through which a solder is introduced, in an abutment-level implant of another shape in a case where a plurality of lateral holes are provided.

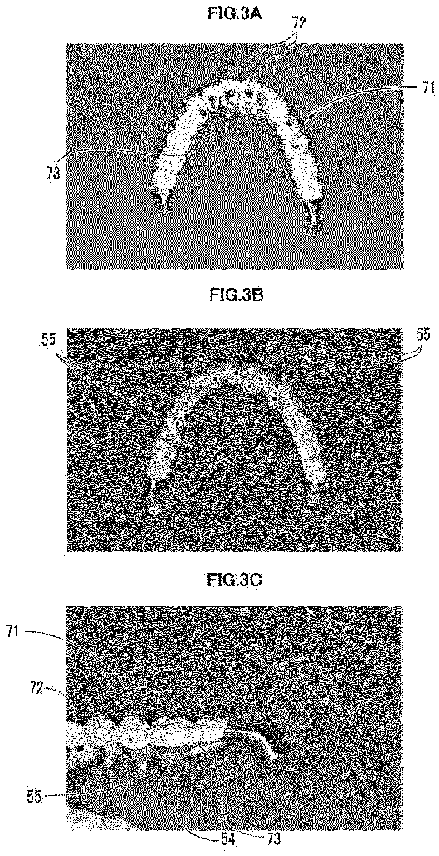

[Figure 3] Figure 3 is photographs showing a modified example of the superstructure of the second embodiment. Figure 3A shows the front side of the superstructure, Figure 3B shows the back side of the superstructure, and Figure 3C shows the lateral side of the superstructure respectively.

### Description of Embodiments

Next, the present embodiments will be described in more detail with reference to the accompanying drawings.

Some superstructures used for implants are directly coupled to a fixture while others are coupled to a fixture through an abutment, and either type of structure can be selected appropriately according to the state inside the oral cavity of a patient. Superstructures of the present invention are applicable to both types of structures. First, referring to Figure 1A, a superstructure directly coupled to a fixture will be described as a first embodiment of the present invention.

A fixture-level implant (hereinafter simply an implant) 1 includes a fixture 2 planted in a jawbone (not shown) and a superstructure 3 coupled to the fixture 2.

The superstructure 3 includes a framework 5, an artificial tooth 4 bonded to the framework 5, and a coupling member 6 coupling the framework 5 to the fixture 2. The coupling member 6 is soldered with a solder 10 to the framework 5, and is fastened with an abutment screw (hereinafter simply a screw) 7 to the fixture 2.

The fixture 2 is made of pure titanium or a titanium alloy, and includes, at an end thereof on the side opposite from the side embedded in a jawbone in the axial direction, a hexagonal part 2a that is engaged with the coupling member 6 and acts as an anti-rotation mechanism and a threaded part 2b on which the screw 7 is fitted. The fixture 2 further includes a threaded part 2c in the outer circumferential surface on the side opposite from the side coupled to the coupling member 6, so that the fixture 2 can be screwed into a jawbone.

The artificial tooth 4 is made of porcelain in this embodiment, but may instead be made of a hard resin or the like.

The framework 5 is made of a cobalt-chromium alloy. For example, an alloy containing 60.2 mass% of cobalt, 25.0 mass% of chromium, 6.2 mass% of tungsten, 4.8 mass% of molybdenum, 2.9 mass% of gallium, less than 1 mass% of silicon, and less than 1 mass% of manganese (the product named Wirobond280 made by Bego, with the solid-phase point 1360°C and the liquid-phase point 1400°C) can be used as the cobalt-chromium alloy.

The framework 5 is composed of a small-diameter cylindrical member 8 and a large-diameter cylindrical member 9 joined with the solder to the outer circumferential surface of the small-diameter cylindrical member 8. The end of the framework 5 on the side opposite from the side joined to the coupling member 6 forms an annular slope that descends gradually from the outer circumferential side toward the inner circumferential side.

The coupling member 6 is a gold-alloy cylindrical body called a gold abutment. Hereinafter the coupling member 6 in this embodiment will be referred to as the gold abutment 6. For example, a gold alloy containing 60 mass% of gold, 20 mass% of palladium, 19 mass% of platinum, and 1 mass% of iridium (the product named GoldAdapt made by Nobel Biocare, with the solid-phase point 1400°C and the liquid-phase point 1490°C) can be used as the gold abutment 6.

A flange 6a protruding outward in the radial direction is provided at the end of the gold abutment 6 on the side coupled to the fixture 2 in the axial direction. A fitting part 6b on which the hexagonal part 2a of the fixture 2 is engaged and fitted is provided in the inner circumferential surface of the flange 6a. The side of the fitting part 6b opposite from the side coupled to the fixture 2 protrudes inward in the radial direction, and is provided with a locking portion 6c on which the gold abutment 6 is locked with the screw 7.

The small-diameter cylindrical member 8 is joined to the side of the gold abutment 6 opposite from the side coupled to the fixture 2. The small-diameter cylindrical member 8 is configured so that the inner circumferential surface thereof is flush with the inner circumferential surface of the gold abutment 6 when the small-diameter cylindrical member 8 is joined to the gold abutment 6.

The large-diameter cylindrical member 9 is joined with the solder to the outer circumferential side of the small-diameter cylindrical member 8 and to the outer circumferential side of the gold abutment 6 except for the flange 6a. The large-diameter cylindrical member 9 increases in diameter gradually in the axial direction from the side of the fixture 2 toward the opposite side, and is configured so that the outer circumferential surface thereof forms a smooth curved surface continuing to the outer circumferential surface of the flange 6a when the large-diameter cylindrical member 9 is joined to the gold abutment 6.

The large-diameter cylindrical member 9, the small-diameter cylindrical member 8, and the gold abutment 6 are joined together with the solder 10 composed of a gold alloy containing gold and silver. For example, a gold solder containing 80 mass% of gold, 17 mass% of silver, and 3 mass% of platinum (the product named S.G1080 made by Cendres+Métaux, with the solid-phase point 1060°C and the liquid-phase point 1080°C), or a gold solder containing 85 mass% of gold, 14 mass% of silver, and total 1 mass% of zinc, platinum, and iridium (the product named S.G1030 made by Cendres+Métaux, with the solid-phase point 990°C and the liquid-phase point 1030°C) can be used as the solder 10. The small-diameter cylindrical member 8 and the gold abutment 6 are joined together by laser welding.

The superstructure 3 is formed as follows. The fixture 2 is embedded into the jawbone of a patient, and the fixture 2 is integrated to the jawbone. Then, a mold (impression) is made of an area including the end face of the fixture 2 on the opposite side from the jawbone to produce a model.

Next, on the basis of the model produced, the cobalt-chromium alloy of the above composition (the product named Wirobond280) is cast and cut to form the large-diameter cylindrical member 9 and the small-diameter cylindrical member 8. To fill a flux described laterand a solder, the large-diameter cylindrical member 9 is provided with a lateral hole 9a that penetrates the circumferential wall in the thickness direction. The lateral hole 9a serves as an introduction hole through which the flux and the solder are introduced. To allow easy introduction of the flux and the solder, a cylindrical introduction chimney to be described later can be provided directly above the lateral hole. Instead of the casting and cutting, CAD/CAM processing may be performed to form the large-diameter cylindrical member 9 and the small-diameter cylindrical member 8.

The gold abutment 6 and the framework 5 are joined together with a gold solder and covered with an artificial tooth, as will be described below, and then coupled with the screw 7 to the fixture inside the oral cavity.

Figure 1B schematically shows a method for joining together the gold abutment 6 and the framework 5 with a gold solder. The large-diameter cylindrical member 9 is set upright on the flange 6a of the gold abutment 6, and the upper end face of the flange 6a and the lower end face of the large-diameter cylindrical member 9 are joined together by laser welding. The small-diameter cylindrical member 8 is set upright on the end face of the gold abutment 6 on the side opposite from the fitting part 6b, and the upper end face of the gold abutment 6 and the lower end face of the small-diameter cylindrical member 8 are joined together by laser welding. At this point, an approximately 10 to 50 µm clearance is left between the inner circumferential surface of the large-diameter cylindrical member 9 and the outer circumferential surface of the small-diameter cylindrical member 8 and between the inner circumferential surface of the large-diameter cylindrical member 9 and the outer circumferential surface of the gold abutment 6 except for the flange 6a.

Next, the flux is poured through the lateral hole 9a so as to be filled in the clearance between the large-diameter cylindrical member 9 and the small-diameter cylindrical member 8 and the clearance between the large-diameter cylindrical member 9 and the gold abutment 6. For example, a mixture of the product named Fluxsol (made by Bego, containing less than 5 mass% of potassium hydrogen difluoride and less than 1 mass% of ethylene glycol) and the product named Minoxyd (made by Bego, containing less than 35 mass% of potassium hydroxide and less than 20 mass% of potassium fluoride) can be used as the flux.

Next, the above gold solder (the product named S.G1080 or S.G1030) is heated to a temperature within the range of 1100 to 1130°C and melted. Then, while the large-diameter cylindrical member 9, the small-diameter cylindrical member 8, and the gold abutment 6 are heated, the molten gold solder is poured through the lateral hole 9a. Thus, the fluidity of the flux filled in the clearances increases and the flux flows to the outside of the clearances, while the molten gold solder is filled into the clearances. Since the clearance between the large-diameter cylindrical member 9 and the small-diameter cylindrical member 8 and the clearance between the large-diameter cylindrical member 9 and the gold abutment 6 communicate with each other, the gold solder can be spread throughout these clearances. As a result, the large-diameter cylindrical member 9, the small-diameter cylindrical member 8, and the gold abutment 6 can be reliably joined together with the solder 10 that is the gold solder, and thus the framework 5 and the gold abutment 6 can be integrated. The lateral hole 9a of the large-diameter cylindrical member 9 is filled with the solder 10.

The gold solder can be introduced into the clearances more reliably, because the large-diameter cylindrical member 9 is provided with a plurality of lateral holes. The superstructure 3 itself is a very small structure and, as described above, the clearance among the large-diameter cylindrical member 9, the gold abutment 6, and the small-diameter cylindrical member 8 is as narrow as 10 to 50 µm. Thus, if there is only one lateral hole, reliably filling the gold solder is very difficult and requires skillfulness.

As shown in Figure 1B, providing the large-diameter lateral hole 9a and small-diameter lateral holes 9b, 9c allows the flux and the gold solder to be filled throughout the clearances more reliably. The large-diameter hole that is a lateral hole with a larger opening diameter can be bored so as to be approximately 1.0 mm to 3.0 mm in diameter, and the small-diameter holes that are lateral holes with a smaller opening diameter can be bored so as to be approximately 0.8 mm to 1.0 mm in diameter. While these lateral holes may be provided at any positions, it is preferable that the large-diameter hole is provided at such a position as to allow the coupling member to be viewed before the solder is introduced. This is because it is important that the gold abutment 6 located at a base part of the implant superstructure and the large-diameter cylindrical member 9 are reliably soldered together.

It is preferable that the small-diameter hole that is a lateral hole with a smaller opening diameter is provided on the upper side (at the position of 9b in Figure 1B) relative to the position opposite from the large-diameter hole. Once the gold solder filled through the large-diameter hole is recognized through the other lateral hole provided on the upper side relative to the position opposite from the large-diameter hole, it is almost certainly that the clearances present in the superstructure 3 have been filled with the gold solder.

In the case of an implant for a comparatively large tooth, such as a molar, it is preferable that an additional lateral hole with a smaller opening diameter as denoted by 9c in Figure 1B, for example, is provided in a lower part of the superstructure 3. With the gold solder supplied through the lateral hole provided in a lower part of the superstructure 3, the gold abutment 6 and the large-diameter cylindrical member 9 can be reliably soldered together.

The lateral holes shown in Figure 1B are merely an example; it goes without saying that the diameters of the lateral holes and the positions at which the lateral holes are bored should be selected according to the shape and the size of the tooth.

Cylindrical introduction parts called chimneys (11a, 11b, 11c) that facilitate introduction of the gold solder can be provided on the outside of the respective lateral holes (9a, 9b, 9c) to allow easy filling of the gold solder. The chimney may be provided for each lateral hole as shown in Figure 1B or provided for only the large-diameter hole. After the clearances are filled with the gold solder, the chimney is cut off along with the gold solder remaining inside the chimney.

Next, the integrated body of the framework 5 and the gold abutment 6 is cut and polished on the basis of the model so that the outer surface of the large-diameter cylindrical member 9 and the outer surface of the flange 6a of the gold abutment 6 form a smoothly continuous curved surface.

Next, in the case where porcelain is used for the artificial tooth 4, a paste containing a powder raw material and a solvent is applied to the outer surface of the framework 5 (except for an inner wall surface 8a of the small-diameter cylindrical member 8) into the shape of the artificial tooth 4. Then, the framework 5 is heated at a temperature of approximately 780 to 1000°C to volatize the solvent and fire the powder raw material. Thus, the artificial tooth 4 that is bonded to the framework 5 and has a through-hole 4a serving as an access hole can be formed. For example, the products named Reflex Porcelain and Reflex Mixing Liquid (both made by Wieland) can be used as the powder raw material and the solvent, respectively. The through-hole 4a is filled by being packed with a hard resin etc. Thus, the superstructure 3 is formed.

The superstructure 3 of this embodiment has the framework 5 made of a cobalt-chromium alloy, and the cobalt-chromium alloy has a 0.2% proof stress of 720 MPa and a modulus of elasticity of 210 GPa. By contrast, pure titanium used for the frameworks of conventional superstructures has a 0.2% proof stress of 340 MPa, and the modulus of elasticity is 100 GPa in the case of a gold alloy and a platinum alloy.

Thus, the superstructure 3 of this embodiment has excellent rigidity and can secure the strength compared with conventional superstructures with the framework made of a gold alloy, a platinum alloy, pure titanium, or a titanium alloy.

The framework 5 and the gold abutment 6 of the superstructure 3 of this embodiment are firmly joined together with the solder 10, and thus are prevented from being disjoined from each other while the superstructure 3 is fixed to the fixture 2 with the fitting part 6b fitted on the hexagonal part 2a.

In the superstructure 3 of this embodiment, the gold alloy composing the gold abutment 6 coupled to the fixture 2 has lower hardness than pure titanium or the titanium alloy composing the fixture 2. Thus, if an excessive force is exerted between the superstructure 3 and the fixture 2 due to an improper joint position etc. while the superstructure 3 is coupled to the fixture 2, damage to the fixture 2 can be prevented as the fitting part 6b of the gold abutment 6 deforms (fail-safe mechanism). Thus, the need for replacing the fixture 2 embedded in the jawbone is avoided and burden on the patient can be reduced.

Since the framework 5 and the gold abutment 6 of the superstructure 3 are joined together by soldering, unlike when these are joined together by laser welding, air bubbles are rarely formed in the clearance between the framework 5 and the gold abutment 6. Accordingly, no air is released from the clearance while the powder raw material is fired, and the artificial tooth 4 can be prevented from being left with holes.

The artificial tooth 4 varies in shape according to the position inside the oral cavity at which the artificial tooth 4 is required. For example, the artificial tooth 4 is desired to be thin when used for an incisor, while the artificial tooth 4 is desired to be short in height when used for a molar.

As described above, the framework 5 has excellent rigidity, and that excellent rigidity can be secured even when the length orthogonal to the axial direction of the framework 5 is reduced (the diameter is reduced) or the length in the axial direction is reduced (the height is reduced). Thus, an artificial tooth 4 of a desired shape can be formed.

As the framework 5 of the superstructure 3 of this embodiment can be formed in a narrow shape, the superstructure 3 can have a shape that rises substantially vertically from the fixture 2. Thus, the periphery of the implant 1 is easy to clean, and periodontal disease etc. can be suppressed.

Next, referring to Figure 2, a superstructure coupled to a fixture through an abutment will be described as a second embodiment of the present invention.

An abutment-level implant (hereinafter simply an implant) 51 includes a fixture 52 planted in a jawbone B and a superstructure 53 coupled to the fixture 52.

The superstructure 53 includes a framework 54 made of a cobalt-chromium alloy and provided with a hole 54a at a center part, an artificial tooth 59 bonded to the framework 54, and a coupling member 55 (hereinafter a gold cylinder 55) made of a gold alloy and coupling the framework 54 to the fixture 52. The superstructure 53 is further provided with an abutment 56 that is made of pure titanium or titanium and interposed between the gold cylinder 55 and the fixture 52 to couple the gold cylinder 55 to the fixture 52.

The superstructure 53 is coupled to the fixture 52 as follows. First, the lower end of the abutment 56 is engaged with the upper end of the fixture 52, and the fixture 52 and the abutment 56 are coupled together with an abutment screw 57. Next, the lower end of the gold cylinder 55 with the framework 54 joined thereto is engaged with the upper end of the abutment 56, and the abutment 56 and the gold cylinder 55 are coupled together with a prosthetic screw 58. The gold cylinder 55 and the framework 54 are firmly joined together by soldering with a gold solder containing gold and silver (e.g., the product named S.G1080 or S.G1030).

The gold cylinder 55 and the framework 54 are joined together in the same way as with the above-described fixture-level implant. As shown in Figure 2B, the framework 54 is provided with lateral holes (54a, 54b, 54c) through which the gold solder is filled. Chimneys (60a, 60b, 60c) through which the gold solder is introduced are provided in an upper part of the lateral holes (54a, 54b, 54c). A flux is poured through the chimney 60a into the lateral hole 54a and filled into the clearance, and then the molten gold solder is poured. After the clearance is filled with a gold solder 61, the chimney is cut off along with the gold solder remaining inside the chimney, and the framework is polished so that the lateral hole filled with the gold solder and the outer surface of the framework form a smoothly continuous curved surface.

As the framework 54 is made of a cobalt-chromium alloy, the superstructure 53 of this embodiment has excellent rigidity compared with conventional superstructures with the framework made of a material such as a gold alloy, a platinum alloy, pure titanium, or a titanium alloy.

The gold alloy composing the gold abutment 56 in the superstructure 53 of this embodiment has lower hardness than pure titanium or the titanium alloy composing the fixture 52 or the abutment 56. Thus, if an excessive force is accidentally exerted between the superstructure 53 and the fixture 52 while the superstructure 53 is coupled to the fixture 52, the gold cylinder 55 deforms but the fixture 52 and the abutment 56 can be prevented from damaging.

Figure 2C shows a form of joining together a gold cylinder 62 and a framework 63 in a case where an abutment-level implant of another shape is used. The gold cylinder 62 and the framework 63 are joined together in the same way as with the above-described implant. As shown in Figure 2C, the framework 63 is provided with lateral holes (64a, 64b, 64c) through which a gold solder is filled. Chimneys (65a, 65b, 65c) through which the gold solder is introduced are provided in an upper part of the lateral holes (64a, 64b, 64c). A flux is poured through the chimney 65a into the lateral hole 64a and filled into the clearance, and then the molten gold solder is poured. After the clearance is filled with a gold solder 66, the chimney is cut off along with the gold solder remaining inside the chimney. Then, the framework is polished so that the lateral hole filled with the gold solder and the outer surface of the framework form a smoothly continuous curved surface.

After an artificial tooth (not shown) is formed on the outside of the framework 63, the framework 63 and the gold cylinder 62 joined together with the gold solder is coupled with a prosthetic screw 67 to an abutment screw, which couples an abutment 68 to a fixture (not shown), and thus fixed inside the oral cavity.

As has been described above, implants include fixture-level implants and abutment-level implants, with various shapes within each type of implants, as one example is shown in Figure 2. The joining method of the present invention using a gold solder can accommodate implants of any shape.

While the superstructures applied to implants that support one artificial tooth by one fixture have been described in the first embodiment and the second embodiment, the present invention is also applicable to implant bridges that support a plurality of artificial teeth in the entire upper jaw or lower jaw by a plurality of fixtures.

A superstructure 71 shown in Figure 3A to Figure 3C is applied to an implant bridge that is attached to a lower jaw and supports 14 artificial teeth 72 by five fixtures (not shown). There are 14 artificial teeth 72 formed on the outer surface of one framework 73 provided over the entire jawbone.

In the superstructure 71, five frameworks 54 of the second embodiment are joined together in the horizontal direction with pure titanium or a titanium alloy and extended at both ends so as to constitute the horseshoeshaped framework 73 that covers the entire jawbone. Figure 3B and Figure 3C show the gold cylinder 55 joined to each framework 54 by soldering.

As the framework 54 is made of a cobalt-chromium alloy, the superstructure 71 of this embodiment has excellent rigidity compared with conventional superstructures with the framework made of a material such as a gold alloy, a platinum alloy, pure titanium, or a titanium alloy.

Next, an example and a comparative example regarding the strengths of the superstructures of the embodiments will be shown.

### Examples

### [Example 1]

A cast body made of a cobalt-chromium alloy and measuring 2 mm in diameter and 20 mm in length was prepared as a first material to be soldered. The cobalt-chromium alloy used was Wirobond280 mentioned above.

A cast body made of a gold alloy and measuring 2 mm in diameter and 20 mm in length was prepared as a second material to be soldered. The gold alloy used was GoldAdapt mentioned above.

Next, the first and second materials to be soldered were each cut into 10 mm long pieces with a cutting disc (silicon-carbide, medium-fine "Ultra-thin Multi-Purpose Abrasive Discs" made by Keystone Industries, NJ USA). Two pieces of the respective materials were butted together with a 30 µm clearance left therebetween and fixed at two points by spot welding with a laser welding machine (Mini-LASER XXS made by OROTIG S.r.l., Garda, Italy).

Next, the first and second materials to be soldered were subjected to soldering operation by a furnace soldering method, and were then taken out of the furnace and let cool in the atmosphere. Thus, a soldered specimen was produced.

The soldering operation was performed using a gold solder containing 80 mass% of gold, 17 mass% of silver, and 3 mass% of platinum (the product named S.G1080 made by Cendres+Métaux, with the solid-phase point 1060°C and the liquid-phase point 1080°C), at a soldering temperature of 1100 to 1130°C and for a holding time of one minute under depressurized conditions.

With both ends clamped by a drill chuck, the soldered specimen produced was subjected to five times of tensile testing at a crosshead speed of 1.0 mm/min using a universal material testing machine (Autograph AG-I 20kN made by Shimadzu Corporation). The soldering strength calculated from the maximum load at the time of fracture was 565.7 MPa (standard deviation: 36.0).

### [Comparative Example 1]

In this comparative example, cast bodies made of a gold alloy and measuring 2 mm in diameter and 20 mm in length were prepared as first and second materials to be soldered. The gold alloy contains 58 mass% of gold, 29 mass% of palladium, 8 mass% of silver, with the balance including iridium, tin, and ruthenium, and has a solid-phase point of 1215°C and a liquid-phase point of 1305°C.

Next, the first and second materials to be soldered were fixed by spot welding with the laser welding machine in entirely the same way as in Example 1.

Next, the first and second materials to be soldered were subjected to the soldering operation in entirely the same way as in Example 1, and were then taken out of the furnace and let cool in the atmosphere. Thus, a soldered specimen was produced.

Next, the soldered specimen produced was subjected to tensile testing in entirely the same way as in Example 1. The soldering strength calculated was 460 MPa.

It is clear that the soldered specimen of Example 1 is superior in strength to the soldered specimen of Comparative example 1. From this result, it is clear that the superstructure of the embodiment of which the cobalt-chromium-alloy framework and the gold-alloy coupling member are joined together with the solder composed of a gold alloy containing gold and silver has excellent strength compared with superstructures of the related art of which the gold-alloy framework and coupling member are joined together with a solder composed of the gold alloy.

### Reference Signs List

2 ... Fixture
3 ... Superstructure
4 ... Artificial tooth
5 ... Framework
6 ... Coupling member, gold abutment
6a ... Flange
6b ... Fitting part (engaging part)
8 ... Small-diameter cylindrical member
9 ... Large-diameter cylindrical member
9a, 9b, 9c ... Lateral hole
10 ... Solder
52 ... Fixture
53 ... Superstructure
54 ... Framework
55 ... Coupling member, gold cylinder
56 ... Abutment
59 ... Artificial tooth
54a, 54b, 54c ... Lateral hole
61 ... Solder
62 ... Coupling member, gold cylinder
63 ... Framework
64a, 64b, 64c ... Lateral hole
68 ... Abutment
66 ... Solder
71 ... Superstructure
72 ... Artificial tooth
B ... Jawbone

## Claims

1. A superstructure (3, 53) coupled to a fixture that is made of pure titanium or a titanium alloy and planted in a jawbone, the superstructure (3, 53) comprising:
a framework (5, 54, 63) made of a cobalt-chromium alloy;
an artificial tooth (4, 59) bonded to the framework (5, 54, 63); and
a coupling member (6, 55, 62) joined to a lower part of the inside of the framework (5, 54, 63) to couple the framework (5, 54, 63) to the fixture, **characterized in that** the coupling member (6, 55, 62) is made of a gold alloy, and
two or more lateral holes (9a, 9b, 9c, 54a, 54b, 54c, 64a, 64b, 64c) are bored in the framework (5, 54, 63), and
the framework (5, 54, 63) and the coupling member (6, 55, 62) are integrated by being soldered together with a solder (10, 61, 66) composed of a gold alloy containing gold and silver.

2. The superstructure (3, 53) according to claim 1, wherein the lateral holes (9a, 9b, 9c, 54a, 54b, 54c, 64a, 64b, 64c) include a large-diameter hole (9a, 54a, 64a) and a small-diameter hole (9b, 9c, 54b, 54c, 64b, 64c).

3. The superstructure (3, 53) according to any one of claims 1 or 2, wherein the solder (10, 61, 66) contains gold within a range of 80 to 85 mass% and silver within a range of 14 to 17 mass%.

4. The superstructure (3, 53) according to any one of claims 1 to 3, wherein
the coupling member (6, 55, 62) includes, at an end thereof on the side joined to the fixture in the axial direction of the coupling member (6, 55, 62), an engaging part that is formed so as to be engageable with the fixture and a flange (6a) that protrudes outward in the radial direction from the outer circumferential surface of the coupling member (6, 55, 62),
the framework (5, 54, 63) includes a small-diameter cylindrical member (8) that is provided on the side of the coupling member (6, 55, 62) opposite from the side joined to the fixture, and a large-diameter cylindrical member (9) that is provided on the side of the outer circumferential surface of the coupling member (6, 55, 62) except for the flange and on the side of the outer circumferential surface of the small-diameter cylindrical member (8), and
the small-diameter cylindrical member (8) and the large-diameter cylindrical member (9) of the framework (5, 54, 63) and the coupling member (6, 55, 62) are integrated by being soldered together with the solder (10, 61, 66).

5. The superstructure (3, 53) according to any one of claims 1 to 4, wherein
the two or more lateral holes (9a, 9b, 9c, 54a, 54b, 54c, 64a, 64b, 64c) are bored in the large-diameter cylindrical member (9) of the framework (5, 54, 63),
at least one lateral hole is bored at such a position as to allow the coupling member (6, 55, 62) to be viewed before a solder (10, 61, 66) is introduced, and
at least one lateral hole is bored at such a position as to allow the small-diameter cylindrical member (8) to be viewed before a solder (10, 61, 66) is introduced.

6. The superstructure (53) according to any one of claims 1 to 5, wherein the superstructure (53) is coupled to the fixture with an abutment (56, 68) made of pure titanium or a titanium alloy interposed between the coupling member (55, 62) and the fixture.

## Patentansprüche

1. Superstruktur (3, 53), welche mit einer Haltevorrichtung verbunden ist, welche aus purem Titan oder einer Titanlegierung hergestellt ist und in einen Kieferknochen implantiert ist, wobei die Superstruktur (3, 53) umfasst:
einen Rahmen (5, 54, 63) aus einer Kobalt-Chrom-Legierung;
einen künstlichen Zahn (4, 59), welcher mit dem Rahmen (5, 54, 63) verbunden ist; und
ein Verbindungsteil (6, 55, 62), welches mit einem unteren Teil des Inneren des Rahmens (5, 54, 63) verbunden ist um den Rahmen (5, 54, 63) mit der Haltevorrichtung zu verbinden, **dadurch gekennzeichnet, dass** das Verbindungsteil (6, 55, 62) aus einer Goldlegierung hergestellt ist und zwei oder mehrere laterale Löcher (9a, 9b, 9c, 54a, 54b, 54c, 64a, 64b, 64c) in den Rahmen (5, 54, 63) gebohrt sind, und der Rahmen (5, 54, 63) und das Verbindungsteil (6, 55, 62) dadurch verbunden sind, dass sie mit Lötflussmittel (10, 61, 66) zusammengelötet sind, welches sich aus einer Gold und Silber enthaltenden Goldlegierung zusammensetzt.

2. Superstruktur (3, 53) gemäß Anspruch 1, wobei die lateralen Löcher (9a, 9b, 9c, 54a, 54b, 54c, 64a, 64b, 64c) ein Loch mit großem Durchmesser (9a, 54a, 64a) und ein Loch mit kleinem Durchmesser (9b, 9c, 54b, 54c, 64b, 64c) beinhalten.

3. Superstruktur (3, 53) gemäß einem der Ansprüche 1 oder 2, wobei das Lötflussmittel (10, 61, 66) Gold innerhalb eines Bereichs von 80 bis 85 Massen-% und Silber innerhalb eines Bereichs von 14 bis 17 Massen-% enthält.

4. Superstruktur (3, 53) gemäß einem der Ansprüche 1 bis 3, wobei das Verbindungsteil (6, 55, 62) an einem Ende auf der Seite, welche mit dem Halteteil in axialer Richtung des Verbindungsteils (6, 55, 62) verbunden ist, ein Eingriffsteil beinhaltet, das so ausgebildet ist, dass es mit dem Halteteil und einer in radialer Richtung von der äußeren Umfangsoberfläche des Verbindungsteils (6, 55, 62) nach außen hervorragenden Flanke (6a) in Eingriff bringbar ist, wobei der Rahmen (5, 54, 63) ein zylindrisches Teil (8) mit kleinem Durchmesser, welches auf der Seite des Verbindungsteils (6, 55, 62) gegenüber der Seite, welche mit dem Halteteil verbunden ist, vorgesehen ist, und ein zylindrisches Teil (9) mit großem Durchmesser, welches auf der Seite der äußeren Umfangsoberfläche des Verbindungsteils außer der Flanke (6, 55, 62) und auf der Seite der äußeren Umfangsoberfläche des zylindrischen Bauteils (8) mit kleinem Durchmesser angebracht ist, enthält, und
das zylindrische Teil mit kleinem Durchmesser (8) und das zylindrische Teil mit großem Durchmesser (9) des Rahmens (5, 54, 63) und das Verbindungsteil (6, 55, 62) dadurch verbunden sind, dass sie mit dem Lötflussmittel (10, 61, 66) zusammengelötet sind.

5. Superstruktur (3, 53) gemäß einem der Ansprüche 1 bis 4, wobei
die zwei oder mehr lateralen Löcher (9a, 9b, 9c, 54a, 54b, 54c, 64a, 64b, 64c) in das zylindrische Teil (9) mit großem Durchmesser des Rahmens (5, 54, 63) gebohrt sind, mindestens ein laterales Loch in solch einer Position gebohrt ist, so dass es ermöglicht wird, dass das Verbindungsteil (6, 55, 62) gesehen wird, bevor ein Lötflussmittel (10, 61, 66) eingeführt wird, und mindestens ein laterales Loch in einer solchen Position gebohrt ist, dass es ermöglicht wird, dass das zylindrische Teil mit kleinem Durchmesser (8) gesehen wird, bevor ein Lötflussmittel (10, 61, 66) eingeführt wird.

6. Superstruktur gemäß einem der Ansprüche 1 bis 5, wobei die Superstruktur (53) mit dem Halteteil durch ein Widerlager (56, 68) aus purem Titan oder einer Titanlegierung, das zwischen das Verbindungsteil (55, 62) und das Halteteil eingefügt ist, verbunden ist.

## Revendications

1. Superstructure (3, 53) couplée à un corps d'implant qui est réalisé en titane pur ou en alliage de titane et planté dans une mâchoire, la superstructure (3, 53) comprenant :
un cadre (5, 54, 63) réalisé en alliage de cobalt-chrome ;
une dent artificielle (4, 59) collée au cadre (5, 54, 63) ; et
un organe de couplage (6, 55, 62) assemblé à une partie inférieure de l'intérieur du cadre (5, 54, 63) pour coupler le cadre (5, 54, 63) au corps d'implant, **caractérisé en ce que** l'organe de couplage (6, 55, 62) est réalisé en alliage d'or, et
deux trous latéraux (9a, 9b, 9c, 54a, 54b, 54c, 64a, 64b, 64c) ou plus sont percés dans le cadre (5, 54, 63), et
le cadre (5, 54, 63) et l'organe de couplage (6, 55, 62) sont intégrés en étant soudés ensemble avec une brasure (10, 61, 66) composée d'un alliage d'or contenant de l'or et de l'argent.

2. Superstructure (3, 53) selon la revendication 1, dans laquelle les trous latéraux (9a, 9b, 9c, 54a, 54b, 54c, 64a, 64b, 64c) comportent un trou de grand diamètre (9a, 54a, 64a) et un trou de petit diamètre (9b, 9c, 54b, 54c, 64b, 64c).

3. Superstructure (3, 53) selon l'une quelconque des revendications 1 ou 2, dans laquelle la brasure (10, 61, 66) contient de l'or dans une plage de 80 à 85 % en masse et de l'argent dans une plage de 14 à 17 % en masse.

4. Superstructure (3, 53) selon l'une quelconque des revendications 1 à 3, dans laquelle
l'organe de couplage (6, 55, 62) comporte, au niveau d'une extrémité de celui-ci sur le côté assemblé au corps d'implant dans la direction axiale de l'organe de couplage (6, 55, 62), une partie d'engagement qui est formée de façon à pouvoir s'engager avec le corps d'implant et une bride (6a) qui fait saillie vers l'extérieur dans la direction radiale depuis la surface circonférentielle extérieure de l'organe de couplage (6, 55, 62),
le cadre (5, 54, 63) comporte un organe cylindrique de petit diamètre (8) qui est prévu sur le côté de l'organe de couplage (6, 55, 62) opposé au côté assemblé au corps d'implant, et un organe cylindrique de grand diamètre (9) qui est prévu sur le côté de la surface circonférentielle extérieure de l'organe de couplage (6, 55, 62) à l'exception de la bride et sur le côté de la surface circonférentielle extérieure de l'organe cylindrique de petit diamètre (8), et
l'organe cylindrique de petit diamètre (8) et l'organe cylindrique de grand diamètre (9) du cadre (5, 54, 63) et l'organe de couplage (6, 55, 62) sont intégrés en étant soudés ensemble avec la brasure (10, 61, 66).

5. Superstructure (3, 53) selon l'une quelconque des revendications 1 à 4, dans laquelle
les deux trous latéraux (9a, 9b, 9c, 54a, 54b, 54c, 64a, 64b, 64c) ou plus sont percés dans l'organe cylindrique de grand diamètre (9) du cadre (5, 54, 63),
au moins un trou latéral est percé à une position de nature à permettre de visualiser l'organe de couplage (6, 55, 62) avant qu'une brasure (10, 61, 66) soit introduite, et
au moins un trou latéral est percé à une position de nature à permettre de visualiser l'organe cylindrique de petit diamètre (8) avant qu'une brasure (10, 61, 66) soit introduite.

6. Superstructure (53) selon l'une quelconque des revendications 1 à 5, dans laquelle la superstructure (53) est couplée au corps d'implant avec une butée (56, 68) réalisée en titane pur ou en alliage de titane intercalée entre l'organe de couplage (55, 62) et le corps d'implant.
